# DEMANDE DE BREVET EUROPEEN

(11) **EP 1 302 837 A1**
(43) Date de publication de la demande: **16.04.2003**
(21) Numéro de dépôt: 02079041.6
(22) Date de dépôt: 01.10.2002
(51) Int. Cl.: G06F 1/04

(54) **Dispositif de génération d'un signal d'horloge**

(30) Priorité: 09.10.2001 FR 0112981
(71) Demandeur: Koninklijke Philips Electronics N.V., 5621 BA Eindhoven (NL)
(72) Inventeur: Uguen, Emeric, 75008 Paris (FR)
(74) Mandataire: Chaffraix, Jean

(57) **Abrégé**

Dispositif de génération 212 d'un signal d'horloge de sortie 213 destiné à cadencer un circuit de traitement numérique 204, ledit dispositif de génération recevant un premier signal d'horloge 209, caractérisé en ce qu'il comprend un oscillateur générant un second signal d'horloge constituant ledit signal d'horloge de sortie, ledit oscillateur fonctionnant en mode forcé sous le contrôle des fronts montants et descendants dudit premier signal d'horloge, ledit oscillateur fonctionnant en mode libre en l'absence de fronts montants ou descendants dans ledit premier signal d'horloge, la fréquence propre dudit oscillateur étant inférieure à la fréquence dudit premier signal d'horloge.

## Description

### DOMAINE DE L'INVENTION

L'invention concerne un dispositif de génération d'un signal d'horloge de sortie destiné à cadencer un circuit de traitement numérique, ledit dispositif de génération recevant un premier signal d'horloge.

L'invention a de nombreuses applications, notamment dans des lecteurs de cartes à puce.

### ARRIERE PLAN TECHNOLOGIQUE DE L'INVENTION

Les cartes à puces intègrent des éléments de mémoires dédiées au stockage d'informations, telles que des informations sur l'identité d'un individu (par exemple le nom, adresse ...) ou relatives à des données administratives d'un individu (par exemple numéro de sécurité sociale, référence bancaire ...). Les cartes à puces intègrent également des circuits de traitement permettant d'effectuer des opérations sur les données stockées dans lesdits éléments de mémoires, conjointement avec les données envoyées par un lecteur de carte à puce. C'est notamment le cas dans certaines opérations de type transaction bancaire dans lesquelles la carte à puce devient une unité de traitement de données à part entière. Pour que le traitement des données effectué en parallèle entre le lecteur de carte à puce et la carte à puce soit possible, le lecteur de carte à puce fournit un signal d'horloge à la carte à puce. Ce signal d'horloge a pour rôle de cadencer les circuits de traitement numérique disposés sur la carte à puce.

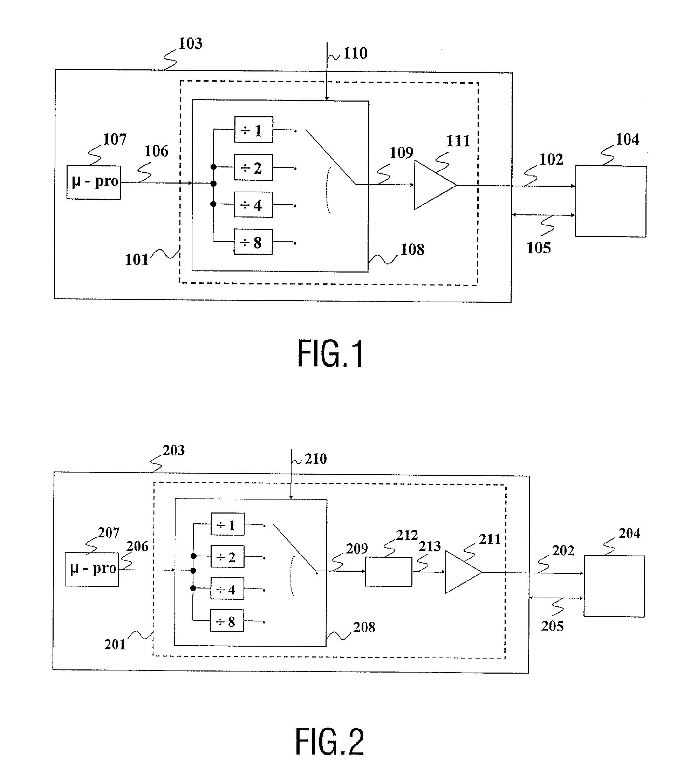

De façon connue, la figure 1 représente un dispositif de génération 101 d'un signal d'horloge de sortie 102. Le dispositif de génération 101 est disposé dans un lecteur de carte à puce 103. Ledit signal d'horloge de sortie 102 est fourni à la carte à puce 104 lorsque celle-ci est en configuration de lecture ou d'écriture permettant un dialogue 105 avec le lecteur de carte à puce.

Le dispositif de génération 101 reçoit un signal d'horloge d'entrée 106 délivré par l'horloge interne du microprocesseur 107 en charge des différentes opérations de traitement sur le lecteur de carte à puce. Pour adapter la fréquence du signal d'horloge de sortie 102 aux caractéristiques de traitement de la carte à puce 104, un diviseur de fréquence 108 reçoit sur son entrée le signal d'horloge d'entrée 106 et délivre un signal d'horloge 109, dit premier signal d'horloge, ayant subi une division de fréquence. La fréquence du signal d'horloge d'entrée 106 est ainsi divisée par un facteur 1, 2, 4 ou 8, suivant la valeur d'un signal de commande 110. Le signal 109 est amplifié par l'étage 111 qui délivre ledit signal d'horloge de sortie 102.

Le dispositif décrit à la figure 1 présente de nombreuses limitations fonctionnelles, en particulier lorsque ledit premier signal d'horloge 106 reçu par le dispositif de génération 101 s'arrête.

En effet, un tel dispositif de génération ne permet pas de délivrer un signal d'horloge de sortie 102 lorsque le signal d'horloge d'entrée 106 délivré par le microprocesseur 107 s'arrête. L'arrêt du signal d'horloge d'entrée 106 délivré par le microprocesseur peut notamment survenir suite à une chute de la tension d'alimentation dudit microprocesseur. Lorsque cela se produit, le signal d'horloge d'entrée 106 reste soit à un niveau binaire haut soit à un niveau binaire bas. Cela a pour conséquence que ledit premier signal d'horloge 109 ainsi que le signal d'horloge de sortie 102 restent respectivement soit à un niveau binaire haut soit à un niveau binaire bas, ce qui risque d'endommager les circuits de traitement de la carte à puce qui sont cadencés par le signal d'horloge de sortie 102. De plus, les opérations de traitement en cours d'exécution sur la carte à puce sont brutalement arrêtées, ce qui peut conduire au stockage de données erronées dans les éléments de mémoires de la carte à puce.

### RESUME DE L'INVENTION

L'invention a pour but de remédier à ces limitations en proposant un dispositif permettant de générer de façon continue un signal d'horloge de sortie même en cas d'arrêt du signal d'horloge délivré par le microprocesseur du lecteur de carte à puce.

Pour cela, l'invention est remarquable en ce que le dispositif de génération du signal d'horloge de sortie comprend un oscillateur générant un second signal d'horloge constituant ledit signal d'horloge de sortie, ledit oscillateur fonctionnant en mode forcé sous le contrôle des fronts montants et descendants dudit premier signal d'horloge, ledit oscillateur fonctionnant en mode libre en l'absence de fronts montants ou descendants dans ledit premier signal d'horloge, la fréquence propre dudit oscillateur étant inférieure à la fréquence dudit premier signal d'horloge.

L'oscillateur présente la caractéristique de fonctionner selon deux modes distincts : en mode forcé lorsque ledit premier signal d'horloge est effectivement présent, en mode libre lorsque ledit premier signal d'horloge est arrêté. Ledit premier signal d'horloge correspond en particulier à un signal d'horloge délivré par un microprocesseur, après une éventuelle division de fréquence par un facteur 1, 2, 4 ou 8. La commutation automatique et immédiate du mode forcé au mode libre, dès que ledit premier signal d'horloge s'arrête, permet de générer un signal d'horloge de sortie sans discontinuité. Ainsi, les circuits de la carte à puce recevant le signal d'horloge de sortie continuent à être cadencés, et les traitements en cours sur la carte à puce peuvent ainsi se poursuivre.

Dans un autre mode de réalisation, l'invention est remarquable en ce que le dispositif de génération du signal d'horloge de sortie comprend :
- un oscillateur générant un second signal d'horloge, ledit oscillateur fonctionnant en mode forcé sous le contrôle des fronts montants et descendants dudit premier signal d'horloge, ledit oscillateur fonctionnant en mode libre en l'absence de fronts montants ou descendants dans ledit premier signal d'horloge, la fréquence propre dudit oscillateur étant inférieure à la fréquence dudit premier signal d'horloge,
- des moyens de détection pour détecter la présence ou l'absence de fronts montants ou descendants dans ledit premier signal d'horloge, afin de générer un signal de commande à deux niveaux logiques, un premier niveau logique indiquant la présence de fronts montants ou descendants dans ledit premier signal d'horloge, un second niveau logique indiquant l'absence de fronts montants ou descendants dans ledit premier signal d'horloge,
- un multiplexeur recevant en entrée ledit premier signal d'horloge et ledit second signal d'horloge, ledit multiplexeur générant à sa sortie ledit signal d'horloge de sortie, ledit multiplexeur étant commandé par ledit signal de commande pour commuter sur sa sortie ledit premier signal d'horloge si ledit signal de commande est dans son premier niveau logique, ou pour commuter sur sa sortie ledit second signal d'horloge si ledit signal de commande est dans son second niveau logique.

Tout comme dans le premier mode de réalisation, l'oscillateur présente la caractéristique de fonctionner selon deux modes distincts : en mode forcé lorsque ledit premier signal d'horloge est effectivement présent, en mode libre lorsque ledit premier signal d'horloge est arrêté. Ledit premier signal d'horloge correspond en particulier à un signal d'horloge délivré par un microprocesseur, après une éventuelle division de fréquence par un facteur 1, 2, 4 ou 8. La commutation automatique et immédiate du mode forcé au mode libre, dès que ledit premier signal d'horloge s'arrête, permet de générer un signal d'horloge de sortie sans discontinuité. Ainsi, les circuits de la carte à puce recevant le signal d'horloge de sortie continuent à être cadencés, et les traitements en cours sur la carte à puce peuvent ainsi se poursuivre.

De plus, la mise en oeuvre du multiplexeur présente l'avantage de générer, lorsque ledit premier signal d'horloge délivré par le microprocesseur est effectivement présent, un signal d'horloge de sortie ayant un très faible décalage temporel avec ledit premier signal d'horloge. Ainsi, les circuits de traitement cadencés par le signal d'horloge de sortie et les circuits de traitement cadencés par ledit premier signal d'horloge sont cadencés de façon synchrone, ce qui contribue à une plus grande fiabilité de traitement et d'échange de données entre les différents circuits de traitement.

Outre le fait que le signal de commande déclenche la commutation du multiplexeur, ce signal de commande peut servir de façon avantageuse à renseigner le lecteur de carte à puce et la carte à puce que le signal d'horloge d'entrée délivré par le microprocesseur s'est arrêté. Ainsi, sous l'action de ce signal de commande, une procédure peut être déclenchée pour finir rapidement et de façon rigoureuse les traitements en cours sur le lecteur de carte à puce ou sur la carte à puce.

Lorsque le signal d'horloge d'entrée délivré par le microprocesseur est effectivement présent, la fréquence du signal d'horloge de sortie généré par le dispositif selon l'invention est identique à la fréquence dudit premier signal d'horloge. Par contre, lorsque ledit premier signal d'horloge est arrêté, la fréquence du signal d'horloge de sortie est la fréquence propre dudit oscillateur.

Le fonctionnement du dispositif de génération selon l'invention est garanti si la fréquence propre de l'oscillateur est inférieure à la fréquence dudit premier signal d'horloge. Cela conduit à une solution peu coûteuse dans la mesure où n'importe quel oscillateur bon marché de fréquence propre inférieure à la fréquence dudit premier signal d'horloge peut être choisi, même si sa fréquence propre subit des variations au cours du temps.

Cette différence de fréquence dans le signal d'horloge de sortie, entre le mode forcé et le mode libre, est sans incidence pour des circuits de traitement disposés sur la carte à puce peu sensible à la précision de la fréquence du signal d'horloge. Cependant, dans l'éventualité ou ces circuits de traitements requièrent un signal d'horloge de fréquence stable au cours du temps, l'invention présente une caractéristique supplémentaire.

En effet, l'invention est remarquable en ce que le dispositif de génération comprend des moyens d'asservissement pour asservir la fréquence propre dudit oscillateur à une fréquence inférieure de quelques pour cent à la fréquence dudit premier signal d'horloge.

Ainsi, le signal d'horloge de sortie conserve la même fréquence pendant la période où le dispositif fonctionne en mode forcé que pendant la période où le dispositif fonctionne en mode libre.

L'invention porte également sur un lecteur de carte à puce comprenant un dispositif de génération d'un signal d'horloge tel que décrit ci-dessus.

L'invention porte également sur un appareil de téléphonie mobile, par exemple un téléphone portale, muni d'un lecteur de carte à puce comprenant un dispositif de génération d'un signal d'horloge tel que décrit ci-dessus.

### BREVE DESCRIPTIONS DES DESSINS

Ces aspects de l'invention ainsi que d'autres aspects plus détaillés apparaîtront plus clairement grâce à la description suivante, faite en regard des dessins ci-annexés, le tout donné à titre d'exemple non limitatif, dans lesquels :
La figure 1 est une représentation fonctionnelle d'un dispositif de génération d'un signal d'horloge connu de l'état de la technique,
La figure 2 est une représentation fonctionnelle d'un dispositif de génération d'un signal d'horloge selon l'invention,
La figure 3 est une représentation fonctionnelle d'un dispositif de génération d'un signal d'horloge selon un premier mode de réalisation de l'invention,
La figure 4 est une représentation fonctionnelle d'un dispositif de génération d'un signal d'horloge selon un second mode de réalisation de l'invention,
La figure 5 représente un schéma d'implémentation d'un dispositif de génération d'un signal d'horloge selon l'invention,
La figure 6 représente l'évolution des différents signaux générés au cours du temps par un dispositif de génération d'un signal d'horloge selon l'invention.

### DESCRIPTION DE MODES DE REALISATION DE L'INVENTION

La figure 2 est une représentation fonctionnelle d'un dispositif de génération d'un signal d'horloge selon l'invention. Le dispositif de génération 201 est disposé dans un lecteur de carte à puce 203. Ledit signal d'horloge de sortie 202 est fourni à la carte à puce 204 lorsque celle-ci est en configuration de lecture ou d'écriture permettant un dialogue 205 avec le lecteur de carte à puce.

Le dispositif de génération 201 reçoit un signal d'horloge d'entrée 206 délivré par l'horloge interne du microprocesseur 207 en charge des différentes opérations de traitement sur le lecteur de carte à puce. Pour adapter la fréquence du signal d'horloge de sortie 202 aux caractéristiques de traitement de la carte à puce 204, un diviseur de fréquence 208 reçoit sur son entrée le signal d'horloge d'entrée 206 et délivre un signal d'horloge 209, dit premier signal d'horloge, ayant subi une division de fréquence. La fréquence du signal d'horloge d'entrée 206 est ainsi divisée par un facteur 1, 2, 4 ou 8, suivant la valeur d'un signal de commande 210.

L'invention se démarque de l'état de la technique en ce qu'un bloc fonctionnel 212 est mis en cascade à la sortie du diviseur de fréquence 208. Le bloc fonctionnel 212 reçoit ainsi en entrée ledit premier signal d'horloge 209 et délivre en sortie un nouveau signal d'horloge 213, dit second signal d'horloge. Le signal d'horloge 213 est éventuellement suivi d'un étage d'amplification 211 qui délivre ledit signal d'horloge de sortie 202, suivant les caractéristiques d'impédance et de niveau que requièrent les circuits recevant le signal d'horloge 202.

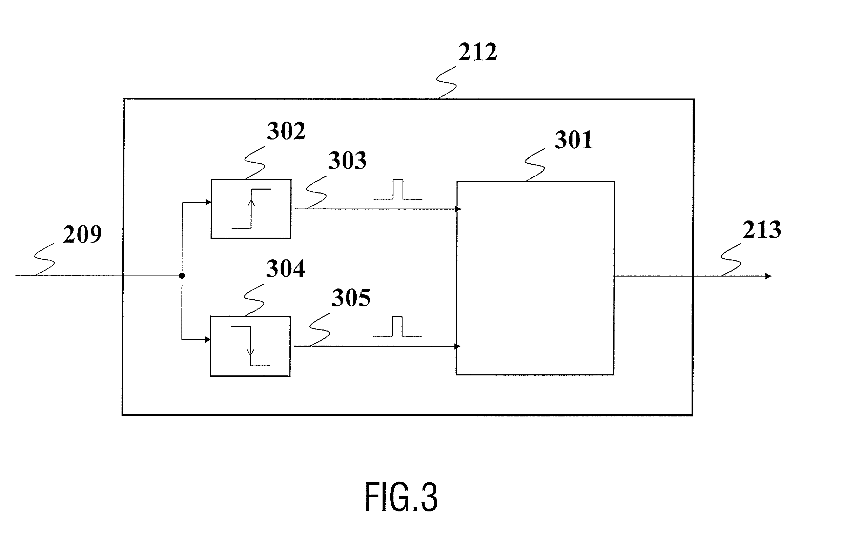

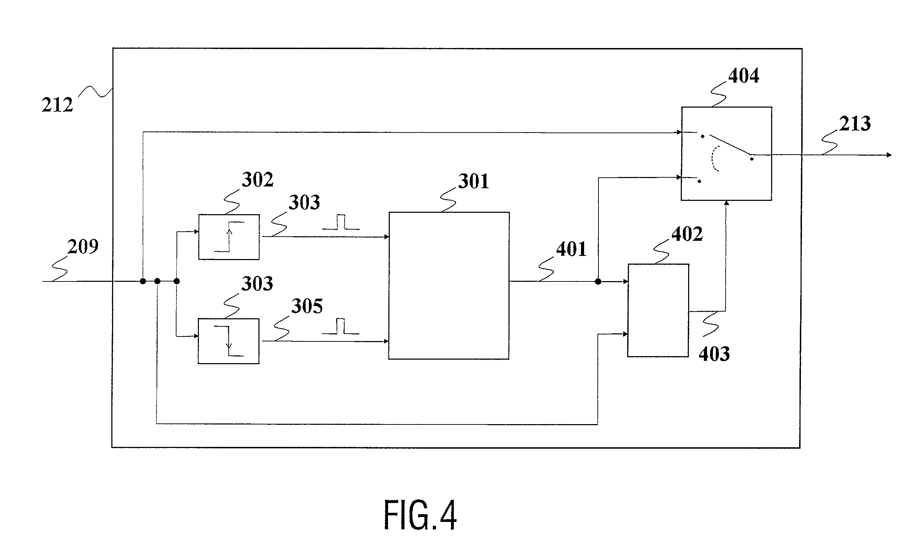

Le bloc fonctionnel 212 a pour fonction de garantir la génération continue dudit second signal d'horloge 213, et par conséquent la génération continue du signal d'horloge de sortie 202, même après l'arrêt dudit premier signal d'horloge 209. Pour cela, deux modes de réalisation sont décrits au regard des figures 3 et 4.

La figure 3 est une représentation fonctionnelle d'un dispositif de génération d'un signal d'horloge 213, selon un premier mode de réalisation du bloc fonctionnel 212 décrit à la figure 2. Le bloc fonctionnel 212 comprend un oscillateur 301 générant ledit second signal d'horloge 213 avant une éventuelle amplification par l'étage d'amplification 211.

L'oscillateur 301 se caractérise par le fait qu'il peut fonctionner selon deux modes différents, en mode forcé ou en mode libre, en fonction de l'état dudit premier signal d'horloge 209.

Lorsque ledit premier signal d'horloge 209 est effectivement présent, c'est-à-dire que le signal 209 est constitué par une succession régulière de fronts montants et descendants au cours du temps, l'oscillateur 301 fonctionne en mode forcé. Pour cela, il est prévu un détecteur de fronts montants 302 délivrant à l'oscillateur 301 une impulsion de sortie 303 sur chaque front montant du signal 209. De même, il est prévu un détecteur de fronts descendants 304 délivrant à l'oscillateur 301 une impulsion de sortie 305 sur chaque front descendant du signal 209. Les impulsions 303 et 305 permettent la mise de l'oscillateur 301 en mode forcé de la façon suivante :
- une impulsion 303 agit sur l'oscillateur 301 pour qu'il génère un front montant dans ledit second signal d'horloge 213,
- une impulsion 305 agit sur l'oscillateur 301 pour qu'il génère un front descendant dans ledit second signal d'horloge 213.
Les impulsions 303 et 305 entraînent la ré-initialisation des départs de cycles de l'oscillateur 301. Cela revient à dire que l'oscillateur 301 est sous le contrôle des fronts montants et descendants du signal 209 puisque :
- un front montant dudit premier signal d'horloge 209 déclenche un front montant dans ledit second signal d'horloge 213,
- un front descendant dudit premier signal d'horloge 209 déclenche un front descendant dans ledit second signal d'horloge 213.

Par conséquent, lorsque ledit premier signal d'horloge 209 est effectivement présent, le signal d'horloge 213 généré par l'oscillateur 301 a la même fréquence que le signal d'horloge 209.

La fréquence propre de l'oscillateur 301 est inférieure à la fréquence dudit premier signal d'horloge 209 de sorte que lorsque ledit premier signal d'horloge 209 est effectivement présent, seuls les fronts montants et descendants du signal d'horloge 209 sont susceptibles de faire changer les niveaux logiques dudit second signal de sortie 213, via la génération des impulsions 303 et 305. En d'autres termes, la fréquence propre de l'oscillateur 301 est inférieure à celle du signal 209 pour que, suite à l'action d'un front du signal 209 entraînant un changement de niveau logique du signal 213, le niveau du signal 213 n'ait pas le temps de changer librement avant l'action du front suivant du signal 209.

Lorsque ledit premier signal d'horloge 209 n'est plus présent, c'est-à-dire que le signal 209 est constitué d'un niveau logique - haut ou bas - ayant la même valeur au cours du temps, l'oscillateur 301 fonctionne en mode libre. Le signal d'horloge 213 généré par l'oscillateur 301 a alors pour fréquence la fréquence propre de l'oscillateur 301.

Le passage du mode forcé au mode libre se fait automatiquement. En effet, considérons le dernier front délivré par le signal 209 avant son arrêt. Ce front entraîne un changement de niveau logique du signal 213. Dans la mesure où il n'y a plus de fronts montants ni descendants dans le signal d'horloge 209, l'oscillateur 301 n'est plus ré-initialisé, si bien que les niveaux logiques du signal d'horloge 213 changent à une fréquence correspondant à la fréquence propre de l'oscillateur. L'oscillateur fonctionne alors en mode libre.

La figure 4 est une représentation fonctionnelle d'un dispositif de génération d'un signal d'horloge 213, selon un second mode de réalisation du bloc fonctionnel 212 décrit à la figure 2.

Ce bloc fonctionnel 212 se compose des éléments 301, 302 et 303 agencés de façon identique à la figure 3, conduisant à la génération du signal d'horloge 401 par l'oscillateur 301. Il comporte en outre un détecteur 402 pour détecter la présence ou l'absence de fronts montants ou descendants dans ledit premier signal d'horloge 209, afin de générer un signal de commande 403 à deux niveaux logiques. Pour cela, le détecteur 402 effectue une analyse simultanée des signaux d'horloge 209 et 401 qu'il reçoit sur ses entrées.

Comme vu précédemment, un front montant dudit premier signal d'horloge 209 déclenche un front montant dans ledit second signal d'horloge 401, et un front descendant dudit premier signal d'horloge 209 déclenche un front descendant dans ledit second signal d'horloge 401. Compte tenu du retard de traitement inévitable dans les circuits constituant les détecteurs 302 et 303, lorsque l'oscillateur 301 est en marche forcée, ledit second signal d'horloge 401 est en retard par rapport audit premier signal d'horloge 209. Ainsi, la présence effective du signal d'horloge 209 est reflétée par deux situations. La première situation est qu'à chaque front montant du signal 401, le signal 209 est à un niveau logique haut. La deuxième situation est qu'à chaque front descendant du signal 401, le signal 209 est à un niveau logique bas. Le détecteur 402 est en charge de la détection de ces deux situations.

Sur chaque front du signal 401, tant que l'une de ces deux situations est effectivement détectée par le détecteur 402, ledit signal de commande 403 généré par le détecteur 402 a pour niveau logique un premier niveau logique. Ce premier niveau logique du signal de commande 403 indique donc la présence de fronts montants ou descendants dans ledit premier signal d'horloge 209. Le signal de commande 403 a donc pour niveau ledit premier niveau logique lorsque l'oscillateur est en mode forcé.

Sur chaque front du signal 401, lorsque l'une de ces deux situations n'est plus détectée par le détecteur 402, ledit signal de commande 403 généré par le détecteur 402 a pour niveau logique un second niveau logique. Ce second niveau logique du signal de commande 403 indique donc l'absence de fronts montants ou descendants dans ledit premier signal d'horloge. Le signal de commande 403 a donc pour niveau ledit second niveau logique lorsque l'oscillateur est en mode libre.

Le bloc fonctionnel 212 comporte également un multiplexeur 404 recevant en entrée le signal d'horloge 209 et le signal d'horloge 401. Le multiplexeur 404 génère à sa sortie ledit signal d'horloge 213. Le multiplexeur 404 est commandé par ledit signal de commande 403 pour commuter sur sa sortie soit le signal d'horloge 209 si ledit signal de commande est dans son premier niveau logique, soit ledit signal d'horloge 401 si ledit signal de commande est dans son second niveau logique. Le multiplexeur 404 est choisi de sorte que le délai de transmission d'un signal numérique entre ses entrées et sa sortie soit très faible, voire quasi nul. Lorsque l'oscillateur 301 fonctionne en marche forcée, le signal d'horloge 213 délivré par le multiplexeur est alors en phase avec le signal d'horloge 209. Lorsque l'oscillateur 301 fonctionne en marche libre, le signal d'horloge 213 délivré par le multiplexeur correspond au signal d'horloge 401 généré par l'oscillateur 301.

Outre le fait que le signal de commande 403 déclenche la commutation du multiplexeur, ce signal de commande 403 peut servir de façon avantageuse à renseigner le lecteur de carte à puce et la carte à puce que le signal d'horloge 209, par exemple délivré par un microprocesseur, s'est arrêté. Ainsi, sous l'action de ce signal de commande, une procédure peut être déclenchée pour finir rapidement et de façon rigoureuse les traitements en cours sur le lecteur de carte à puce ou sur la carte à puce.

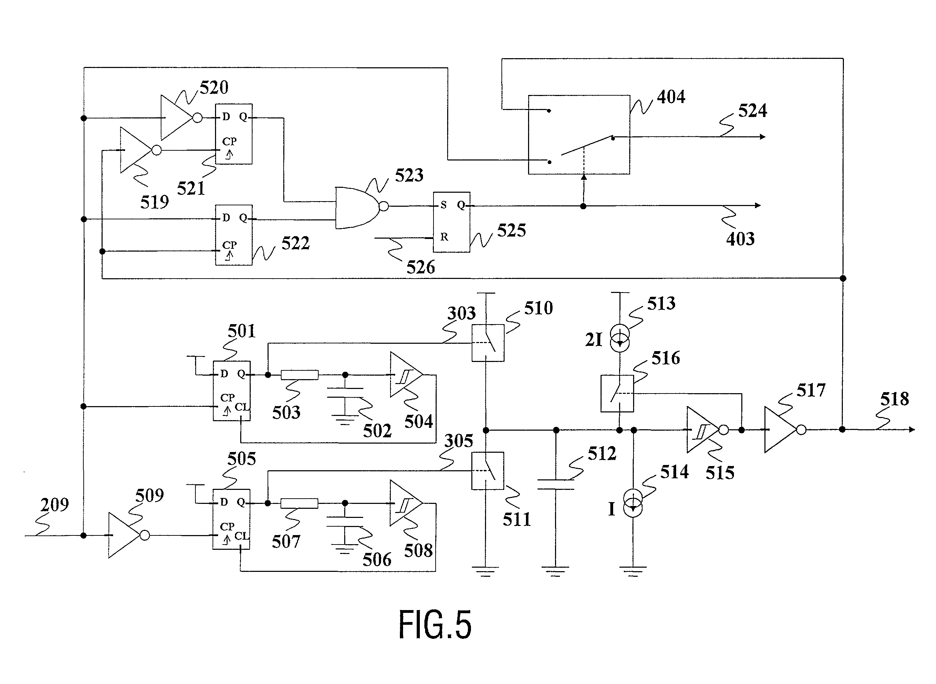

La figure 5 représente un schéma d'implémentation d'un dispositif de génération d'un signal d'horloge selon l'invention. Ce schéma décrit un mode de réalisation du bloc fonctionnel 212 décrit aux figures 2 et 3.

Le détecteur de fronts montants est constitué de la bascule 501, du condensateur 502, de la résistance 503 et du trigger 504. La bascule 501 reçoit sur son entrée CP le signal d'horloge 209. A chaque front montant du signal d'horloge 209, le signal 303 délivré par la bascule 501 sur sa sortie Q passe à un niveau logique haut. Le condensateur 502 se charge alors via la résistance 503 et applique sa tension à l'entrée d'un trigger 504. La tension aux bornes du condensateur 502 croît jusqu'à ce que le seuil de déclenchement du trigger soit atteint. Le signal de sortie du trigger 504 étant relié à l'entrée CL de remise à zéro de la bascule 501, lorsque ledit seuil est atteint, ledit signal de sortie passe à un niveau logique haut qui initialise la bascule 501. Cela a pour effet que le signal 303 repasse à un niveau logique bas. De cette façon, sur chaque front montant du signal d'horloge 209, une impulsion est générée par le signal 303.

Le détecteur de fronts descendants est constitué de la bascule 505, du condensateur 506, de la résistance 507, du trigger 508 et de l'inverseur 509. Les éléments 505 à 508 jouent le même rôle que les éléments 501 à 504, sauf que la bascule reçoit sur son entré CP le signal 209 inversé par l'inverseur 509. De cette façon, sur chaque front descendant du signal d'horloge 209, une impulsion est générée par le signal 305.

L'oscillateur 301 est constitué des interrupteurs 510 et 511 commandés par les signaux 303 et 305, du condensateur 512, des sources de courant 513 et 514, du trigger inverseur 515, de l'interrupteur 516 commandé par le signal de sortie dudit trigger inverseur 515, et de l'inverseur 517.

Lorsque l'oscillateur 301 fonctionne en mode libre, il n'y a pas d'impulsion 303 et 305 de générées si bien que les interrupteurs 510 et 511 restent ouverts. Le condensateur 512 étant initialement déchargé, le signal de sortie du trigger inverseur 515 est à un niveau haut, ce qui ferme l'interrupteur 516. Le condensateur 512 se charge alors avec un courant de valeur I via la source de courant 513. En effet, le courant de valeur 2I délivré par la source de courant 513 se répartit en un courant de valeur I qui traverse la source de courant 514, et en un courant de valeur I qui traverse le condensateur 512. Lorsque la tension aux bornes du condensateur 512 atteint le seuil de déclenchement montant du trigger inverseur 515, la sortie du trigger inverseur 515 passe à un niveau logique bas. L'interrupteur 516 revient alors en position ouverte, ce qui entraîne la charge du condensateur 512 par la source de courant 514 avec un courant de valeur I. Lorsque la tension aux bornes du condensateur 512 atteint le seuil de déclenchement descendant du trigger inverseur 515, la sortie du trigger inverseur 515 repasse à un niveau logique haut, entraînant le fermeture de l'interrupteur 516. A nouveau, le condensateur 512 se charge avec un courant de valeur I via la source de courant 513 pour démarrer un nouveau cycle d'oscillation.

L'inverseur 517 assure l'inversion du signal généré par le trigger inverseur 515, et délivre sur sa sortie basse impédance, le signal d'horloge 518. Le signal d'horloge 518 correspond au signal d'horloge 213 généré par le dispositif décrit à la figure 3.

La fréquence propre du signal d'horloge 518 est déterminée par la valeur du courant généré par les sources de courant 513 et 514, par la valeur du condensateur 512, ainsi que la valeur des seuils de déclenchement du trigger inverseur 515.

L'oscillateur 301 fonctionne en mode forcé lorsqu'il reçoit des impulsions 303 et 305 sur la commande des interrupteurs 510 et 511. Une impulsion 303 entraîne une fermeture de courte durée de l'interrupteur 510, ce qui provoque la charge du condensateur 512. De façon similaire, une impulsion 305 entraîne une fermeture de courte durée de l'interrupteur 511, ce qui provoque la décharge du condensateur 512. En mode forcé, le cycle de charge du condensateur 512 se trouve alors ré-initialisé sur chaque impulsion 303 ou 305, c'est-à-dire sur chaque front du signal d'horloge 209. Entre chaque ré-initialisation, le condensateur 512 se charge par le courant généré soit par la source de courant 513 soit par la source de courant 514, suivant le niveau du signal délivré par le trigger inverseur 515.

Le détecteur 402 comprend les inverseurs 519 et 520, les bascules 521 et 522 de type D, la bascule 525 de type RS, et la porte logique 523 de type NAND. Le détecteur 402 reçoit en entrée le signal d'horloge 209 et le signal d'horloge 518 généré par l'inverseur 517, pour délivrer en sortie de la porte logique 523 le signal de commande 403.

Le multiplexeur 404 reçoit sur ses deux entrées le signal d'horloge 209 et le signal d'horloge 518. Tant que des fronts montants ou descendants sont effectivement présents dans le signal d'horloge 209, le signal délivré par la porte logique 523 est à un niveau bas. Dès que le signal d'horloge s'arrête, le signal délivré par la porte logique 523 passe à l'état haut, ce qui entraîne aussi le passage à l'état haut du signal de commande 403. La commutation d'un des deux signaux d'entrée sur la sortie du démultiplexeur 404 est assurée par le signal de commande 403. Lorsque le signal de commande 403 a un niveau logique bas, le signal de sortie 524 correspond au signal d'horloge 518, tandis que lorsque le signal de commande 403 a un niveau logique haut, le signal de sortie 524 correspond au signal d'horloge 209. Le signal de sortie 524 correspond au signal 213 de la figure 4.

Le signal 403 peut de façon avantageuse être envoyé pour informer le lecteur de carte à puce que le signal 209 s'est arrêté, de façon à lancer une procédure particulière, par exemple une procédure pour finir les opérations de traitement en cours, ou bien une procédure de mise en veille. Suite à cette procédure, une fois que le signal 209 est de nouveau présent, un signal de remise à zéro 526 est généré par le lecteur de carte à puce pour initialiser la bascule 525 de façon à ce que le multiplexeur délivre sur sa sortie le signal 209.

Dans un mode de réalisation perfectionné, il est prévu des moyens d'asservissement pour asservir la fréquence propre de l'oscillateur 301 sur la fréquence du signal d'horloge 209. Pour cela, des moyens connus de l'état de la technique du type boucle à verrouillage de phase peuvent être mis en oeuvre. La fréquence propre de l'oscillateur 301 est alors asservie de façon à ce qu'elle soit inférieure à la fréquence du signal 209 de quelques pour cent seulement.

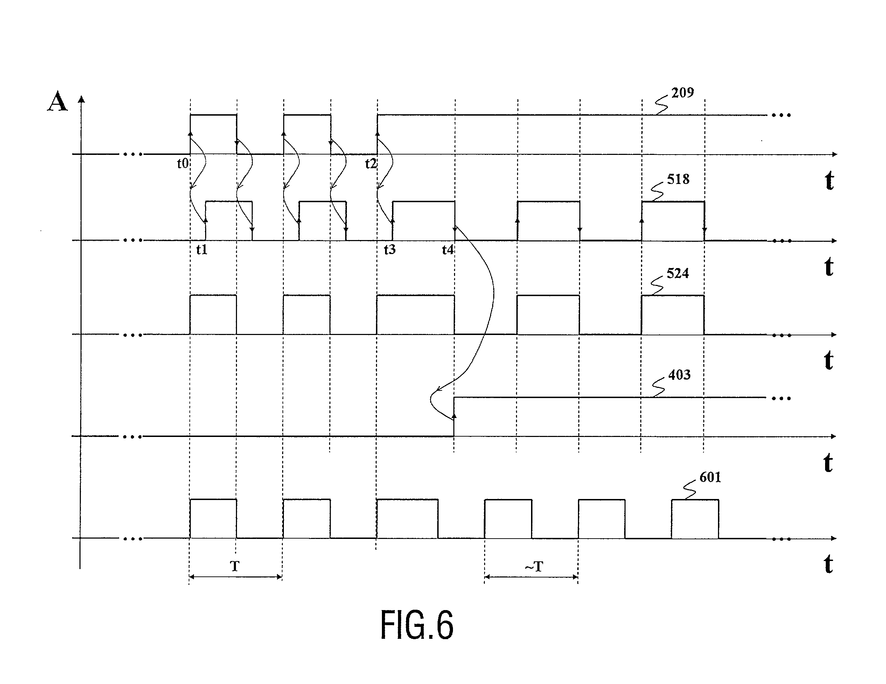

La figure 6 représente l'évolution de l'amplitude A des signaux 209-518-524-403-601 générés au cours du temps par le dispositif décrit à la figure 5.

Entre les instants t0 et t2, le signal d'horloge 209 est effectivement présent. L'oscillateur 301 fonctionne alors en marche forcée et délivre le signal d'horloge 518. Le signal 518 a la même fréquence que celle du signal 209, et présente un retard d'une quantité (t1-t0) par rapport au signal 209. A partir de l'instant t2, le signal 209 s'arrête, par exemple suite à la chute de tension d'alimentation du microprocesseur qui le génère. A l'instant t3, le dernier front généré par le signal 209 entraîne un changement de niveau dans le signal 518. L'oscillateur 301 n'étant plus ré-initialisé sur les fronts du signal 209, le condensateur 512 se charge jusqu'à entraîner un changement de niveau du signal 518 à l'état bas à l'instant t4, la durée (t4-t3) correspondant à une moitié de cycle de l'oscillateur 301. A partir de l'instant t3, l'oscillateur fonctionne en mode libre.

Comme vu précédemment, l'utilisation du détecteur 402 et du multiplexeur 404 permet de réduire le décalage temporel entre le signal 209 et le signal 518 lorsque l'oscillateur fonctionne en mode forcée. Lorsque l'oscillateur 301 fonctionne en mode forcé, le signal de commande 403 est à un niveau bas, si bien que le multiplexeur délivre un signal 524 présentant un décalage temporel quasi nul par rapport au signal 209. A l'instant t4, sur le front descendant du signal 518, le signal 209 n'est pas à un niveau bas comme c'est le cas lorsque le signal 209 est effectivement présent, ce qui entraîne le passage à un niveau haut du signal de commande 403. Le multiplexeur délivre alors le signal généré par l'oscillateur 301 fonctionnant en mode libre.

Le signal 601 correspond au signal 524 lorsque la fréquence propre de l'oscillateur 301 est asservie sur la fréquence du signal 209.

Le dispositif selon l'invention a été décrit dans le cadre d'une utilisation dans un lecteur de carte à puce, pour générer un signal d'horloge envoyé à une carte à puce. Cependant, le dispositif selon l'invention peut aussi être utilisé et implémenté dans tout appareil destiné à générer un signal d'horloge sans interruption au cours du temps. En particulier, le dispositif peut être implémenté dans un appareil portable, par exemple dans un téléphone portable ou un assistant personnel, muni d'un lecteur de carte à puce.

## Revendications

1. Dispositif de génération d'un signal d'horloge de sortie destiné à cadencer un circuit de traitement numérique, ledit dispositif de génération recevant un premier signal d'horloge, **caractérisé en ce qu'il** comprend un oscillateur générant un second signal d'horloge constituant ledit signal d'horloge de sortie, ledit oscillateur fonctionnant en mode forcé sous le contrôle des fronts montants et descendants dudit premier signal d'horloge, ledit oscillateur fonctionnant en mode libre en l'absence de fronts montants ou descendants dans ledit premier signal d'horloge, la fréquence propre dudit oscillateur étant inférieure à la fréquence dudit premier signal d'horloge.

2. Dispositif de génération d'un signal d'horloge de sortie destiné à cadencer un circuit de traitement numérique, ledit dispositif de génération recevant un premier signal d'horloge, **caractérisé en ce qu**'il comprend :
- un oscillateur générant un second signal d'horloge, ledit oscillateur fonctionnant en mode forcé sous le contrôle des fronts montants et descendants dudit premier signal d'horloge, ledit oscillateur fonctionnant en mode libre en l'absence de fronts montants ou descendants dans ledit premier signal d'horloge, la fréquence propre dudit oscillateur étant inférieure à la fréquence dudit premier signal d'horloge,
- des moyens de détection pour détecter la présence ou l'absence de fronts montants ou descendants dans ledit premier signal d'horloge, afin de générer un signal de commande à deux niveaux logiques, un premier niveau logique indiquant la présence de fronts montants ou descendants dans ledit premier signal d'horloge, un second niveau logique indiquant l'absence de fronts montants ou descendants dans ledit premier signal d'horloge,
- un multiplexeur recevant en entrée ledit premier signal d'horloge et ledit second signal d'horloge, ledit multiplexeur générant à sa sortie ledit signal d'horloge de sortie, ledit multiplexeur étant commandé par ledit signal de commande pour commuter sur sa sortie ledit premier signal d'horloge si ledit signal de commande est dans son premier niveau logique, ou pour commuter sur sa sortie ledit second signal d'horloge si ledit signal de commande est dans son second niveau logique.

3. Dispositif de génération d'un signal d'horloge selon la revendication 1 ou 2, **caractérisé en ce qu**'il comprend des moyens d'asservissement pour asservir la fréquence propre dudit oscillateur à une fréquence inférieure de quelques pour cent à la fréquence dudit premier signal d'horloge.

4. Lecteur de carte à puce comprenant un. dispositif de génération d'un signal d'horloge selon la revendication 1.

5. Appareil de téléphonie mobile muni d'un lecteur de carte à puce, ledit lecteur de carte à puce comprenant un dispositif de génération d'un signal d'horloge selon la revendication 1.
